# EUROPEAN PATENT SPECIFICATION

(11) **EP 3 224 489 B1**
(45) Date of publication and mention of the grant of the patent: **28.06.2023**
(21) Application number: 15862837.0
(22) Date of filing: 09.11.2015
(51) Int. Cl.: F16B 35/04, F16B 19/10

(54) **STACKABLE FASTENER**
STAPELBARER BEFESTIGER
ÉLÉMENT DE FIXATION EMPILABLE

(30) Priority: 26.11.2014 US 201414554647
(43) Date of publication of application: 04.10.2017
(73) Proprietor: NMC Group, Inc., Brea, CA 92821-4007 (US)
(72) Inventor: KARLS, James, D., Brea, CA 92821-4007 (US)
(74) Representative: Dolleymores
(86) International application number: PCT/US2015/059669
(87) International publication number: WO 2016/085639

(56) References cited:
- WO-A2-2008/155787
- US-A- 4 048 898
- US-A- 4 048 898
- US-A1- 2004 021 042
- US-A1- 2004 206 855
- US-A1- 2004 206 855
- US-A1- 2009 101 765

## Description

### BACKGROUND OF THE INVENTION

The present invention relates to mounts and fasteners. More specifically, the present invention relates to mounts and fasteners for bundling and tying elongate objects such as electrical wires, tubes and hoses, and for securing such objects to a support.

Many types of mounting devices have been developed over the years for holding one or more elongate objects to a support. One of the more popular devices for use in vehicles, including automobiles and airplanes, has been the "P" clamp. The P clamp includes a metal strap formed into a generally circular portion with each end of the strap terminating in a flat foot portion. After elongate objects are encircled by the circular portion, the feet are overlapped until apertures in the feet are aligned to receive a threaded fastener. Unfortunately, P clamps suffer from numerous disadvantages. Foremost, P clamps are generally not adjustable so that when they are used in an environment where different sizes of bundles have to be accommodated, a large inventory of different sized P clamps must be maintained. Also, it is difficult to achieve a predetermined tension on the held objects, and thus it is sometimes necessary to use additional fillers to encircle the objects to provide consistent compressive forces. The P clamp has changed very little over the years which is surprising considering the various problems associated with their use. Most assemblers agree that the installation of these clamps is difficult because of their stiffness. Furthermore, the use of commercially available P clamps on electrical cables is complicated by the fact that electrical cable diameter dimensions are not tightly controlled and that cables have "soft" irregular cross-sections which can be damaged by excessive force caused by securing with a P clamp.

Relatively recently, ring post fasteners have been introduced into the aircraft industry. For example, U.S. Patent No. 6,880,787 describes a ring post fastener which has a central post. On one end of the post is a female threaded attachment and at the other end of the post is a male threaded attachment. The male and female threads allow the fastener to be stacked. In addition, the ring post fastener has a plurality of spokes which radially project from the post and a ring affixed to the end of the spokes. U.S. Patent No. 7,770,852 describes a ring post fastener wherein the ring is capable of freely rotating about the central post. Again, this fastener is stackable. Unfortunately, present ring post fasteners, as well as other fasteners, typically require that the fastener attach to a threaded substrate. However, not all underlying substrate surfaces have a male or female threaded feature.

US2004/206855 A1 discusses a ringpost assembly comprising a plurality of two-piece, stackable ringposts.

Tie straps, also referred to as cable ties, have been widely used for bundling wires, and for securing such wires to a support. The tie strap structure includes a flexible tie for circling a bundle and a buckle at one end of the tie to lock the tie strap structure into a loop. Various mounts have been developed for securing the tie strap and bundle of wires to a support. The mounts include one or more windows or slots for receiving one end of the tie strap which is then looped back upon itself to be attached by the tie strap's buckle. The mounts are then affixed to a support surface by a threaded fastener or adhesive.

Advantageously, tie straps have adjustable diameters to accommodate a wide variety of bundle diameters. Accordingly, such fasteners typically do not require fillers to provide consistent compressive forces upon objects to be bundled. Unfortunately, presently available mounts for tie straps require that both sides of the mount be accessible for entry and exit of the strap. Further, such mounts require the additional component of an adhesive or of a threaded fastener to secure the mount to a support surface, thereby requiring that an additional inventory of components be maintained.

Accordingly, it would be advantageous to provide an improved fastener which was stackable, and which could mount to non-threaded surfaces.

Furthermore, it would be advantageous to provide an improved fastener and mount construction for bundling and securing elongate objects such as electrical wires and hoses.

Still an additional advantage to an improved fastener would be that the fastener was lightweight, inexpensive to manufacture, and did not require a large number of components.

### SUMMARY OF THE INVENTION

The present invention addresses the aforementioned disadvantages by providing an improved fastener which is capable of stacking and which is capable of affixing to a substrate's non-threaded hole.

There is disclosed a hybrid stackable fastener in accordance with Claim 1.

Thus, an advantage of the present invention is to provide an improved fastener which is stackable to similar fasteners, and which can mount to non-threaded surfaces.

Still an additional advantage of the present invention is to provide an improved fastener and mount construction for bundling and securing elongate objects such as electrical wires and hoses.

Still an additional advantage of the present invention is providing an improved fastener that the fastener is lightweight, inexpensive to manufacture, and does not require a large number of components.

Still an additional advantage of the present invention is to provide a ring-post fastener that does not require the use of additional bolts or washers to affix the fastener to a support surface.

Other features and advantages of the present invention will be appreciated by those skilled in the art upon reading the detailed description which follows with reference to the attached drawings.

### BRIEF DESCRIPTION OF THE DRAWINGS

FIG. 1 is an exploded perspective view of a first example of a stackable fastener;
FIG. 2A is a perspective view of the stackable fastener of FIG. 1 illustrating its use with a hexagonal tool;
FIG. 2B is a top perspective view illustrating the stackable fastener's force member being rotated so as to force fingers radially outward;
FIG. 3A is a top perspective cut-away view illustrating the stackable fastener's force member rotated to allow the fingers to retract inwardly;
FIG. 3B is a top perspective cut-away view illustrating the stackable fastener's force member rotated so as to force fingers radially outward and illustrating the force member including a notch to accept a detent to lock the force member in place;
FIG. 4 A is a bottom cut-away view illustrating the force member rotated to a position so as to allow the stackable fastener's finger to retract inwardly;
FIG. 4B is a bottom cut-away view illustrating the force member rotated so as to force the stackable fastener's fingers radially outwardly and illustrating the fingers including notches to lock the force member in place;
FIG. 5 is a top exploded perspective view of a second example of a stackable fastener;
FIG. 6A is a top perspective view of the stackable fastener illustrated in FIG. 5 illustrating its use with a hexagonal tool;
FIG. 6B is a top perspective view of the stackable fastener illustrated in FIG. 5 wherein the force member has been rotated so as to allow the stackable fastener's fingers to retract inwardly;
FIG. 6C is a top perspective view of the stackable fastener illustrated in FIG. 5 wherein the force member has been rotated to a position forcing the stackable fastener's fingers radially outward;
FIG. 7A is a top perspective view illustrating a stackable fastener wherein its fingers are positioned radially inward prior to insertion into a substrate hole;
FIG. 7B is a top perspective view illustrating a stackable fastener wherein its fingers are positioned radially inward, but have been projected through a substrate hole;
FIG. 7C is a top perspective view illustrating the stackable fastener of FIG. 7B wherein the force member has been rotated so as to force the stackable fastener fingers radially outward to lock the fastener to a substrate;
FIG. 8 is a top perspective view illustrating two (2) stackable fasteners stacked together and mounted to a substrate;
FIG. 9 is a side cross-sectional view of the stackable fastener illustrated in FIG. 7B;
FIG. 10 is a side cross-sectional view of the stackable fastener illustrated in FIG. 7C;
FIG. 11 is a side cross-sectional view of a pair of stackable fasteners affixed together and mounted to a substrate in accordance with FIG. 8;
FIG. 12 is an exploded top perspective view of a third example of a stackable fastener;
FIG. 13 is a side cross-sectional view of the stackable fastener illustrated in FIG. 12;
FIG. 14A is a top perspective view of a stackable fastener of the present invention for affixing to a threaded substrate;
FIG. 14B is a top perspective cross-sectional view of the stackable fastener illustrated in FIG. 14A;
FIG. 15 is an exploded top perspective view of the stackable fastener illustrated in FIG. 14A and 14B;
FIG. 16 is a top perspective view illustrating an embodiment of a stackable fastener without threaded elements to be mounted to a stackable fastener including a threaded element affixed to a substrate;
FIG. 17 is a top perspective view illustrating the stackable fasteners illustrated in FIG. 16 stacked together and mounted to a substrate having a threaded hole; and
FIG. 18 is a top perspective cross-sectional view illustrating the two fasteners illustrated in FIGS. 16 and 17.

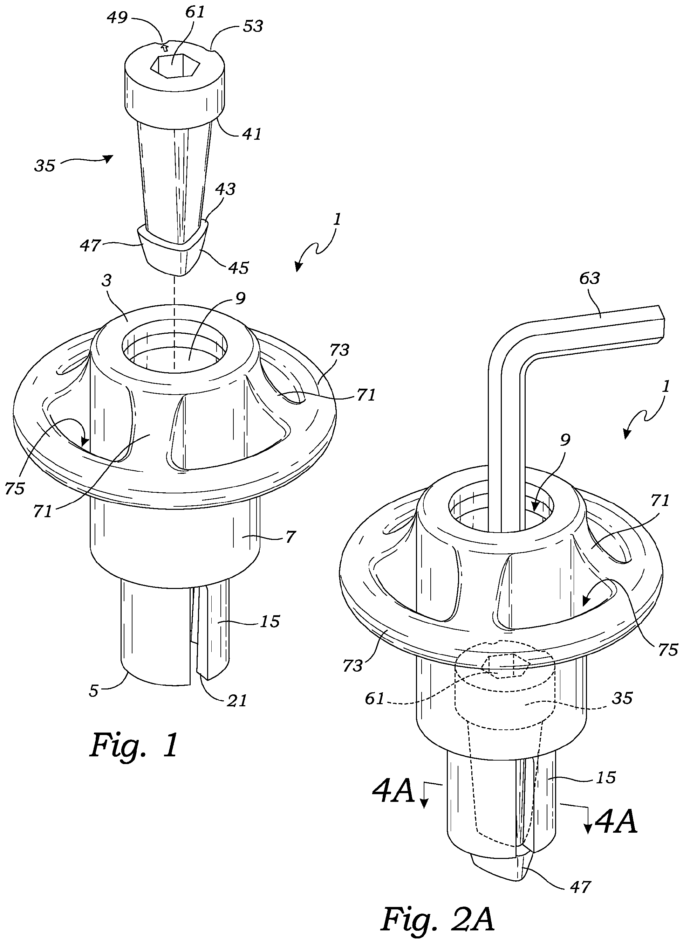

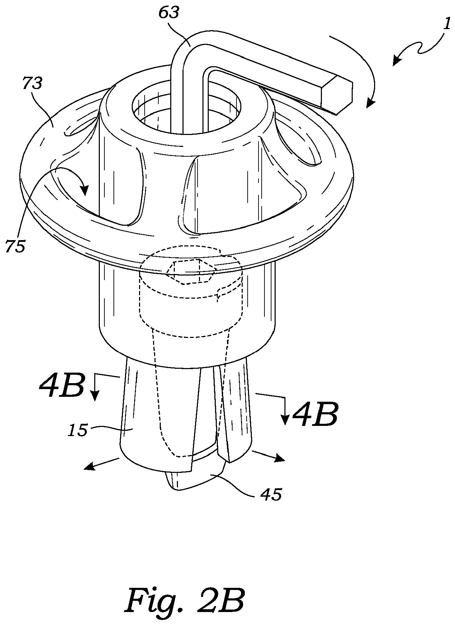

The examples shown in figures 1-13 do not fall under the scope of the appended claims.

### DETAILED DESCRIPTION OF THE INVENTION

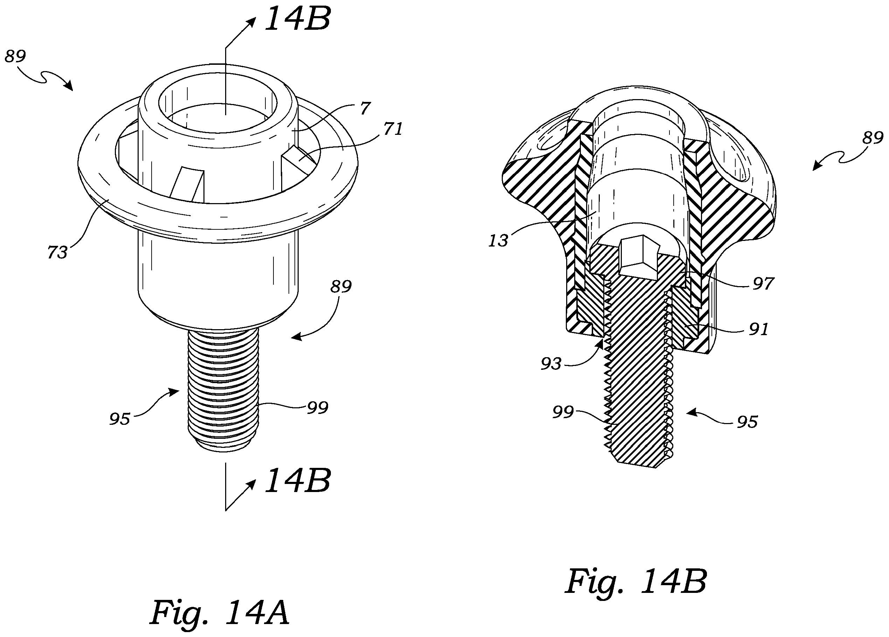

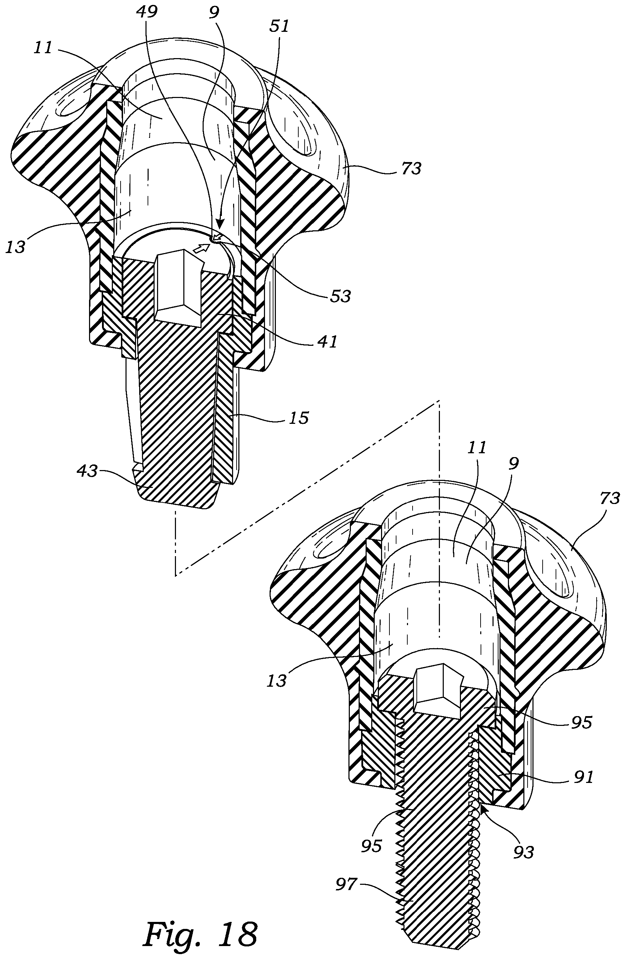

While the present invention is susceptible of embodiment of various forms, as shown in Figures 14 to 18, hereinafter will be described the presently preferred embodiments of the invention, and other examples of stackable fasteners, with the understanding that the present disclosure is of examples only, and it is not intended to limit the invention to the specific embodiments illustrated.

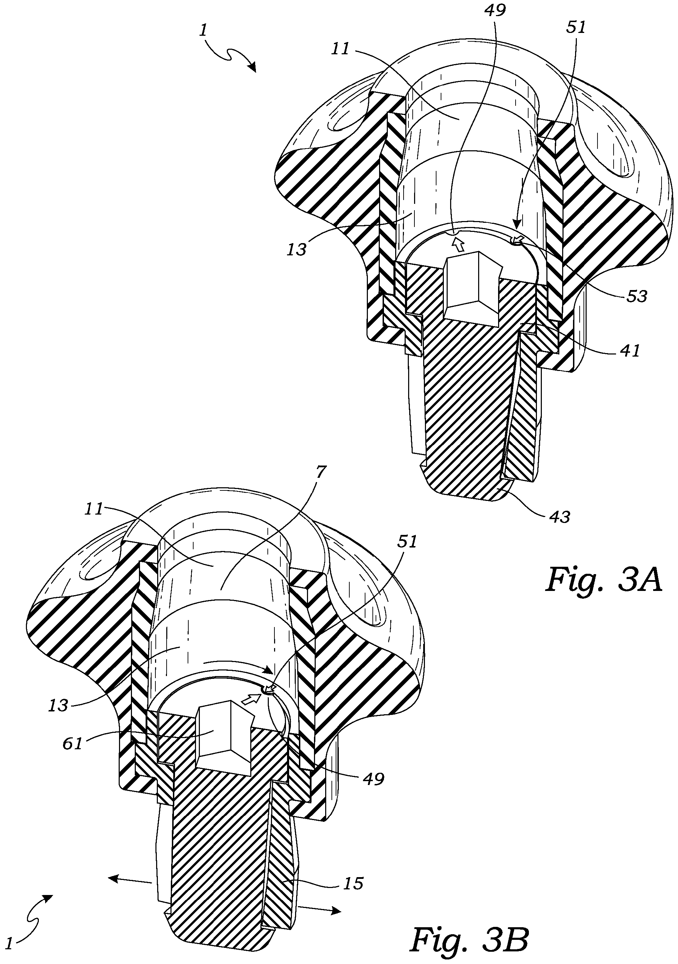

With reference to the figures, the stackable fastener 1 includes a body 7 and fingers 15. The body is generally cylindrical and has a substantially cylindrical central bore 9. As illustrated in FIGS. 3A, 3B, and 9 - 11, the central bore 9 has a proximal end 11 and a distal end 13. Furthermore, it is preferred that the central bore is tapered so as to have a diameter smaller at the bore's proximal end 1 1 than at the central bore's distal end 13.

Meanwhile, the stackable fastener's fingers 15 extend distally from the body's distal end. The fingers are preferably of equal length and are positioned concentrically about the stackable fastener 1.

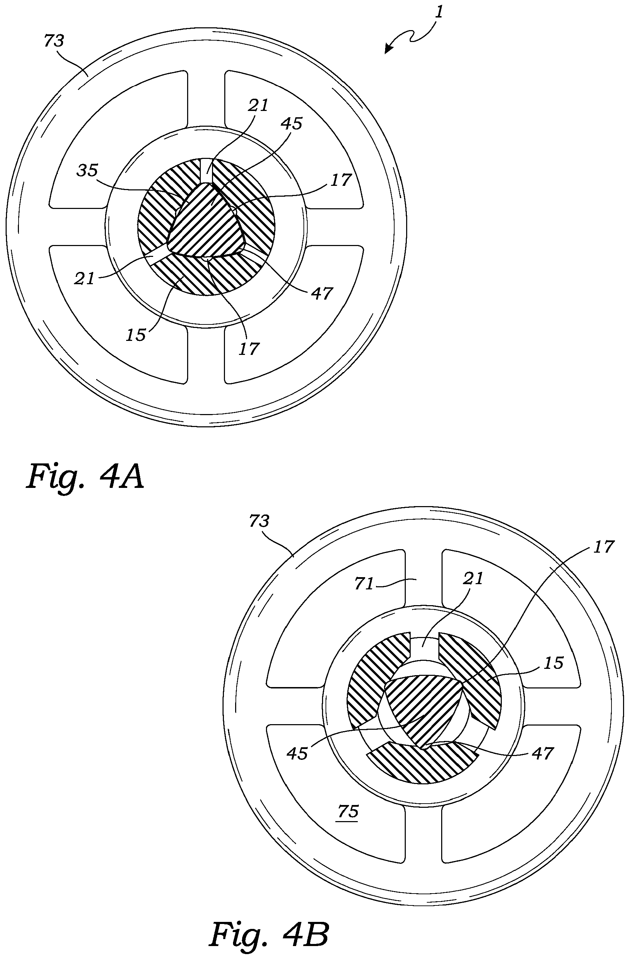

In addition, the stackable fastener 1 includes a force member 35. The force member is provided so as to controllably force the fingers 15 radially outward, or allow the fingers to retract radially inward. The force member 15 is positioned within the fastener's central bore 9 and extends axially between the fingers 15. In a first example illustrated in FIGS. 1-4, the force member 35 has a cylindrical proximal end for rotating within the fastener's cylindrical central bore 9. In addition, the force member includes a cam 45 which forms the distal end of the force member 35. The cam 45 includes a plurality of projections 47 wherein the cam has the same number of projections as the stackable fastener has fingers 15. As best illustrated in FIG. 4A, the projections 47 are configured so as to reside within the spaces 21 between the fingers so as to not force the fingers radially outward. As best illustrated in FIG. 4B, the rotation of the force member 35 within the central bore 9 causes the projections to move out of the spaces 21 so as to engage the inner surfaces of the fingers 15. As illustrated in the figures, a preferred stackable fastener includes three fingers 15 and the cam 45 includes a corresponding three projections.

Preferably, the stackable fastener 1 includes a mechanical structure for locking the force member 35 when the force member has forced the fingers radially outward. In a preferred example, this lock is accomplished by providing each of the fingers with notches 17 sized to receive the projections 47. (See FIGS. 4A and 4B). In still an additional example illustrated in FIGS. 3A and 3B, the force member 35 includes an upper shoulder 41 and a lower shoulder 43 for preventing removal of the force member from the stackable fastener's central bore 9. In addition, the force member includes a notch 49 for receiving a detent 51 which, as illustrated in FIG. 3B, projects into the force member notch 49 so as to rotationally lock the force member in place so as to lock the fingers radially outward. Also preferable, the force member includes a stop 53 to engage the body detent 51 to limit rotation of the force member within the central bore when the force member is rotated to position the force member's projections between the fingers so as to cause the fingers to retract radially inward.

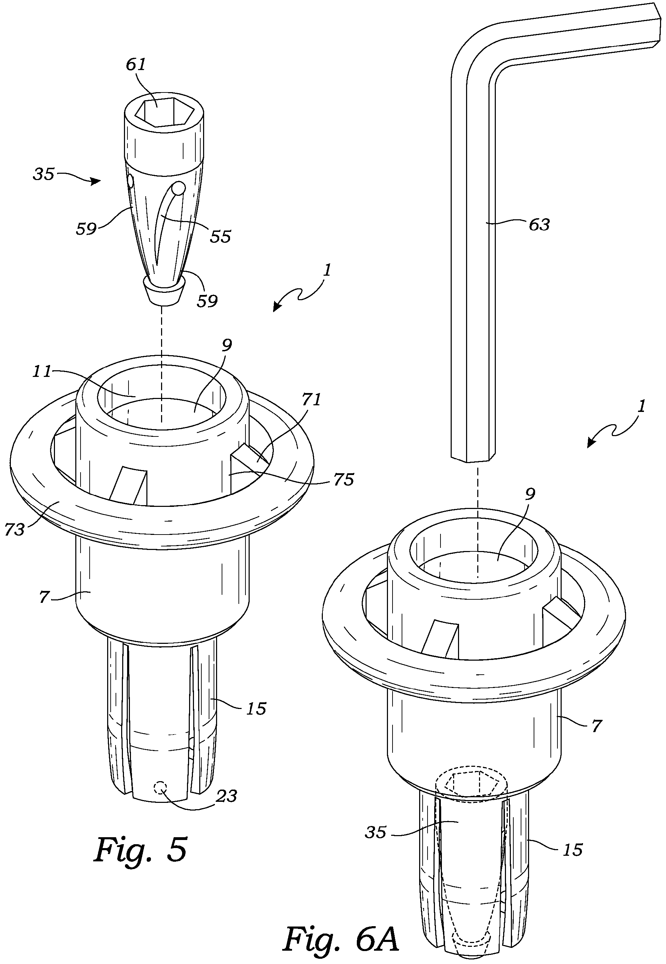

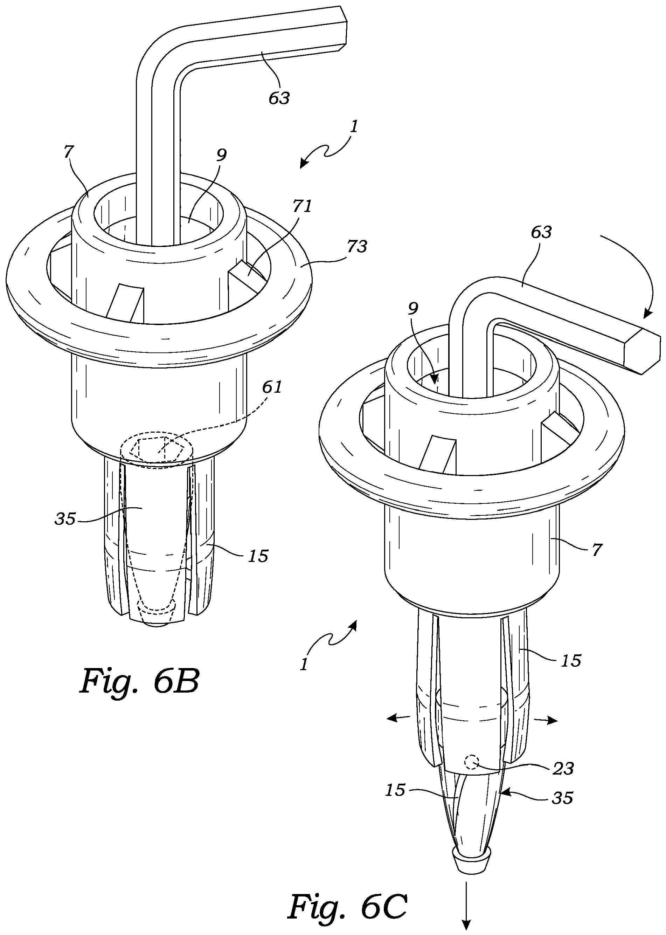

As understood by those skilled in the art, for the stackable fastener example of FIGS. 1 -4, the force member is rotatable within the stackable fastener's central bore, but not movable axially with respect to the stackable fastener's body. In a second example, the stackable fastener's force member is constructed to move axially as the force member is rotated. With reference to FIGS. 5 - 11, the force member 35 has a cylindrical proximal region and a tapered distal region 59 which has a wider cross-section toward the proximal end of the force member 35 than at its distal end. In addition, the force member includes one or more spiral slots 55. In an example not shown, the force member includes a single spiral slot 55 which winds itself helically upon the tapered distal region of the force member. However, in a preferred example illustrated in FIGS. 5-6, the force member 35 includes four arcuate slots 55. Each of these slots are sized to receive nubs 23 which project radially inward from the distal ends of the fingers 15. Rotation of the force member within the stackable fastener's central bore 9 causes the force member to travel upwardly or downwardly as the nubs 23 travel within the slots 55. Rotation is preferably accomplished using a hexagonal tool 63 fitted within a hexagonal recess 61 formed in the top surface of the force member. As illustrated in FIGS. 6B and 6C, rotation of the force member causes the force member to move distally with the force member's tapered surface 59 forcing the fingers 15 radially outward. Preferably, the fingers 15 can be locked radially outward by providing the force member's slot 55 with a circular recess for receiving the finger's nub 23.

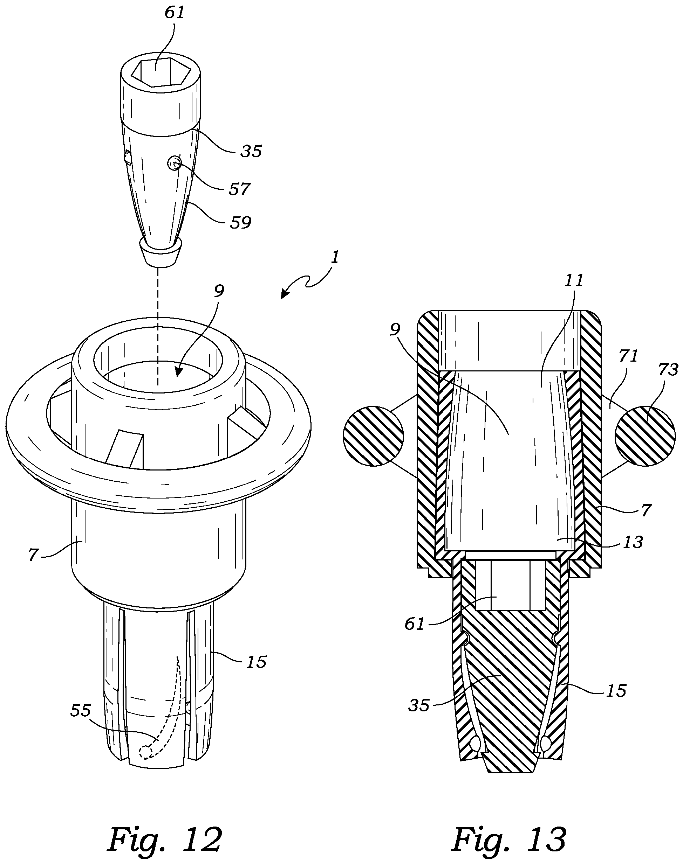

In still an additional third example, the stackable fastener includes a force member substantially similar to that described above and illustrated in FIGS. 5-7. However, as illustrated in FIGS. 12 and 13, instead of a force member 35 including a spiral slot 55 for receiving nubs 23 which project inwardly from the fingers, the slots and nubs are reversed so that the slots 55 are formed into the fingers 15 and the nubs 57 project outwardly from the force member's exterior. As illustrated in FIGS. 12 and 13, the force member nubs 57 project into the finger slots 55 such that rotation of the force member 35 causes the force member to move upwardly or downwardly in a spiral manner in accordance with the path of the slots 55. As with other examples, movement of the force member in the proximal direction causes the fingers to retract, but movement of the force member in the distal direction forces the fingers radially outward.

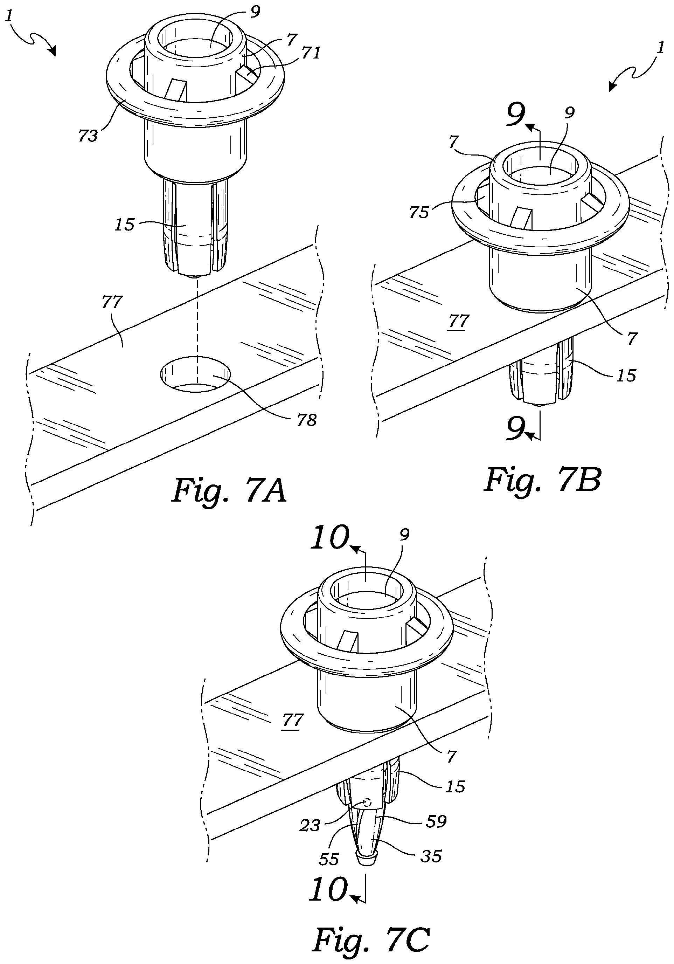

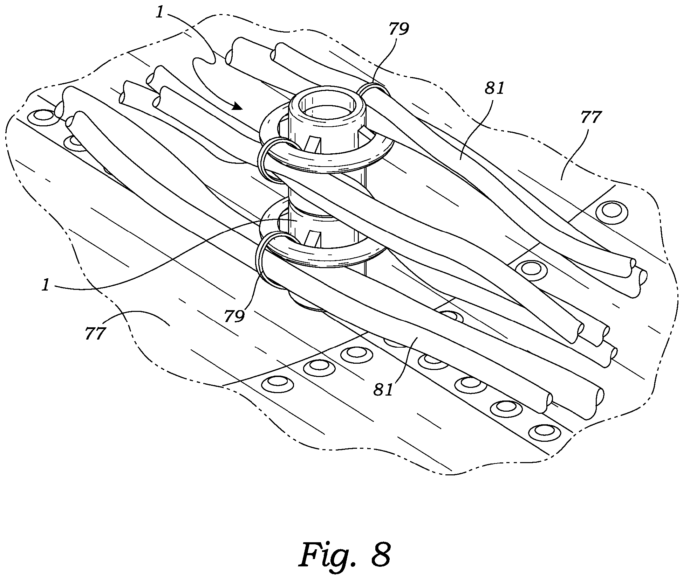

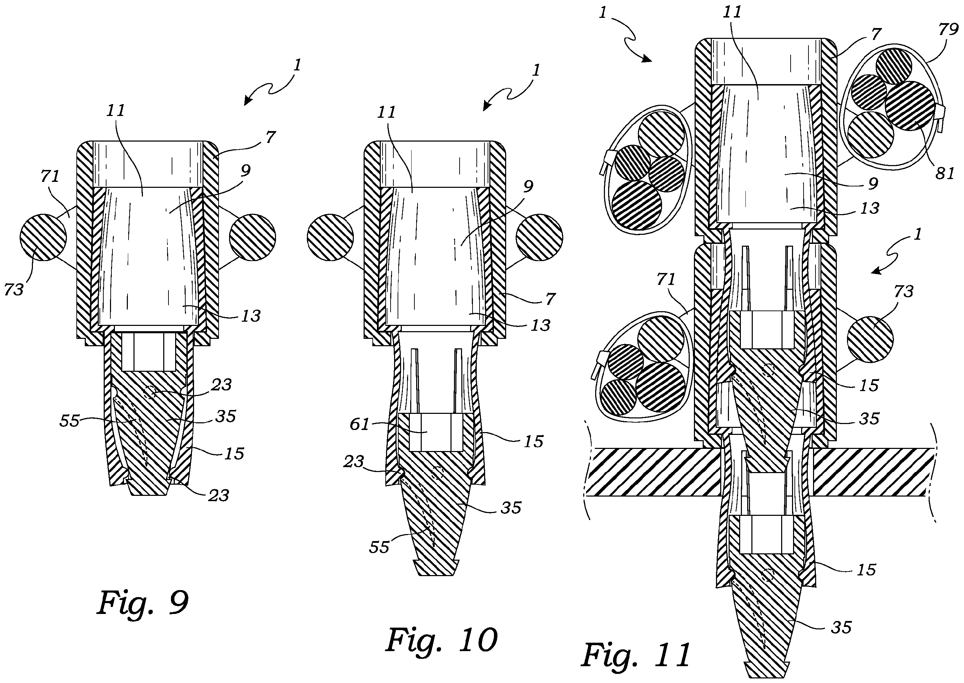

As illustrated in FIGS. 7A - 7C, the stackable fastener 1 is constructed to affix to a substrate 77 having a hole 78. The hole 78 must be properly sized so as to be sufficiently large to receive the fastener's fingers 15 when the fingers are retracted inward, as illustrated in FIGS. 7A and 7B. However, the hole 78 must be sized sufficiently small so as to prevent disengagement of the fastener 1 from the substrate 77 when the force member 35 has forced the fastener's fingers 15 radially outward. In addition, as illustrated in FIGS. 8 - 11, the stackable fastener's central bore 9 is sized to receive a similar fastener's fingers 15. Again, the central bore is sized to receive the fingers 15 when the fingers have been retracted radially inward. However, the central bore's size and tapered shape prevent removal of the fingers from the central bore, and a resulting disengagement of stackable fasteners, when the force member has been rotated so as to force the fingers 15 radially outward, as illustrated in FIG. 11.

Advantageously, the stackable fastener can be affixed to a substrate 77, or any number of stackable fasteners can be stacked on top of one another.

As illustrated throughout FIGS. 1 - 13, the preferred stackable fastener 1 includes four spokes 71 which extend radially from the fastener's body 7. The fastener further includes a ring 73 concentric with the fastener's central axis when secured in place by the spokes 71. The spokes 71 are sufficiently thin so as to provide slots 75 which are sufficiently lodged to accept a conventional tie strap 79. As illustrated in FIG. 8, the stackable fastener can affix to a substrate 77, be stacked upon one another, and affix elongate objects such as cables 81.

A disadvantage of the stackable fasteners illustrated in FIGS. 1 - 13 is that they are not ideal for mounting to a substrate having a female threaded hole. To overcome this disadvantage, still an additional stackable fastener 1 of the present invention is illustrated in FIGS. 14 - 18. This "hybrid" fastener 89 includes a male threaded distal end 99 for threadably affixing to a female threaded hole 87 formed in a substrate 77. However, like the stackable fasteners described above, the hybrid fastener 89 includes a proximal end having a tapered bore 9 for receiving the radially projectable fingers 15 of the stackable fasteners described above which do not have threaded elements.

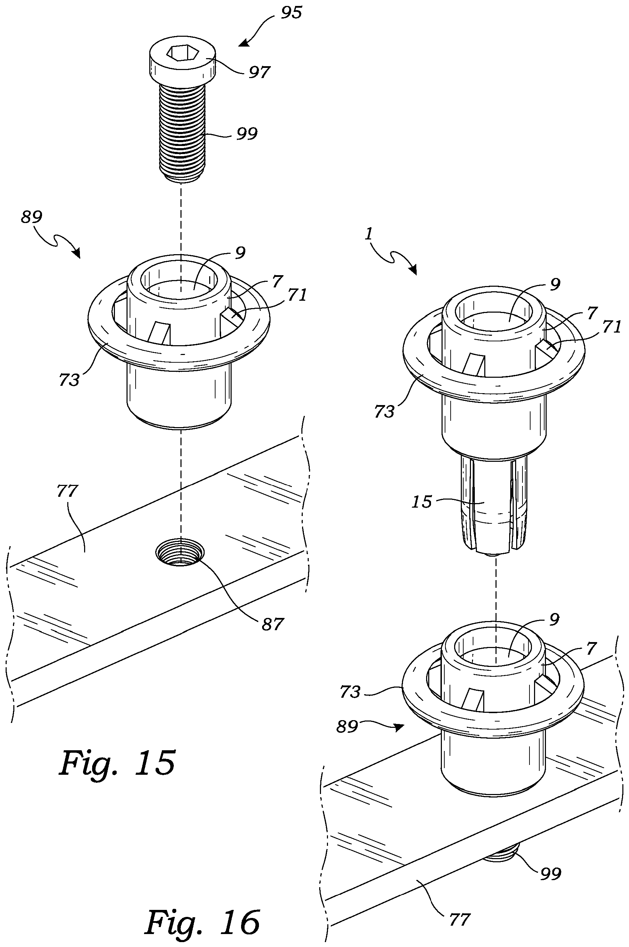

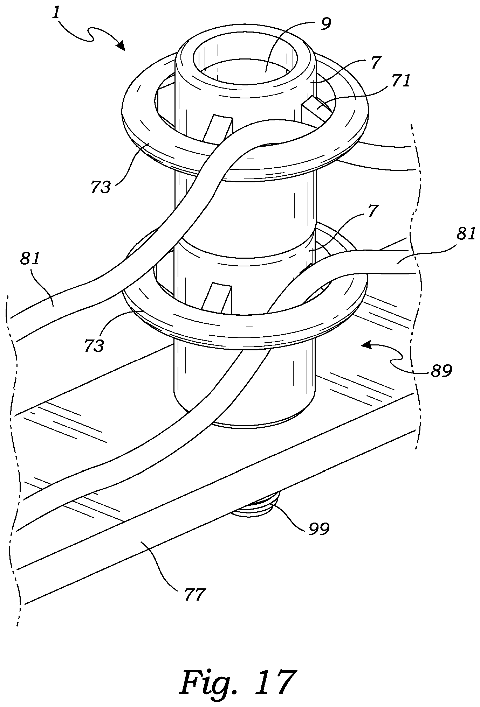

With reference to FIGS. 14 - 18, the hybrid fastener 89 includes a cylindrical body 7 having a substantially cylindrical central bore 9. As illustrated in FIG. 14B, the central bore has a proximal end 11 and a distal end 13. As with other embodiments, the central bore is tapered so as to have a diameter smaller at the bore's proximal end 11 than at the central bore's distal end 13. As illustrated in FIGS. 16 and 17, the hybrid fastener's central bore 9 is sized to receive and affix to the fingers 15 of the stackable fasteners 1 illustrated in FIGS. 1-13.

The hybrid stackable fastener 89 also includes a bolt 95 having a head 97 and a screw thread 99 which extends distally from the fastener's body 7. The bolt's head 97 may be affixed to the body's distal end so as to prevent their relative axial movement or rotation such as by molding the bolt head 97 into the body 7. However, in a more preferred embodiment, the bolt 95 floats within the fastener's central bore 9. For this embodiment illustrated in FIG. 14B and FIG. 15, the hybrid fastener 89 includes an annular shoulder 91 at the central bore's distal end 13. The annular shoulder forms a circular opening 93 having a diameter sufficiently large to allow the bolt's male screw thread 99 to project distally from the body's distal end. However, the bolt's head 97 has a diameter larger than the annular shoulder's opening 93 so as to allow the bolt to affix the fastener's body 7 to a substrate 77, as illustrated in FIG. 16. As illustrated in FIGS. 16 - 18, once the hybrid stackable fastener 89 has been affixed to a substrate 77, a stackable fastener 1 without a threaded element (as illustrated in FIGS. 1 - 13) can be affixed to the hybrid fastener 89. The hybrid fastener's central bore 7 is sized to receive the fingers 15 when the fingers have been retracted radially inward. Once the stackable fastener's fingers 15 have been projected into the hybrid stackable fastener's central bore 9, the fingers are forced radially outward, such as by rotation of a force member, so as to lock a stackable fastener 1 as illustrated in FIGS. 1-13 upon a hybrid stackable fastener 89 as illustrated in FIGS. 14 - 18. Advantageously, once a hybrid stackable fastener 89 has been affixed to the threaded hole 87 of a substrate 77, any number of stackable fasteners 1 can be stacked on top of one another.

The stackable fasteners 1 and 89 are preferably made of plastic. Acceptable plastics include thermal plastics such as ABS, polyvinyl chloride, polyethylene, styrene, and nylon. Thermosetting plastics such as polyester and silicon are also acceptable. In a preferred embodiment, the stackable fastener is made of a woven polyamide. Alternative materials including composites or metals including steel, aluminum, titanium and alloys may also be selected by those skilled in the art. Furthermore, a combination of these materials may be employed to obtain the mechanical properties desired.

While several particular forms of the invention have been illustrated and described, it will be apparent that various modifications can be made without departing from the scope of the invention. Therefore, it is not intended that the invention be limited except by the following claims. Having described my invention in such terms so as to enable persons skilled in the art to understand the invention, recreate the invention and practice it, and having presently identified the presently preferred embodiments thereof, I claim:

## Claims

1. A hybrid stackable fastener comprising:
a cylindrical body (3) having a central bore defining a central axis, said bore having a distal end (13) and a proximal end (11) and forming an opening at its proximal end (11),
a plurality of spokes (71) radially projecting from said body;
a ring (73) concentric with said body;
said spokes engaging and radiating radially inward from said ring to engage said body to form a plurality of hollow slots (75) with the periphery of each of said slots being defined by said body, a pair of adjacent spokes and said ring so that said slots form bores permitting the passage of objects and
a bolt (95) having a screw thread (99) which extends distally in the direction of said central axis from the body's central bore;
**characterised by** said central bore being tapered to have a diameter smaller at the bore's proximal end than toward the bore's distal end;
and further comprising an annular shoulder (91) within said central bore, said annular shoulder located at said bore's distal end forming an opening (93) having a diameter smaller than the proximal end of said central bore; and
said bolt having a head (97) and the screw thread (95), said bolt's head having a diameter smaller than the diameter of said bore's proximal section but having a diameter larger than the diameter of said annular shoulder's opening, said bolt's screw thread having a diameter smaller than said annular shoulder's opening enabling said bolt to be positioned with said bolt's head within said bore's proximal section and with said bolt's thread extending distally through and distally beyond said annular shoulder's opening.

2. The hybrid stackable fastener of claim 1 wherein said bolt is rotatable within said central bore (9).

## Patentansprüche

1. Hybrider stapelbarer Befestiger, umfassend:
Einen zylindrischen Körper (3) mit einer mittigen Bohrung, die eine Mittelachse definiert, wobei die Bohrung ein fernes Ende (13) und ein nahes Ende (11) aufweist und eine Öffnung an ihrem nahen Ende (11) bildet,
Eine Vielzahl von Speichen (71), die radial aus dem Körper ragen;
einen Ring (73) konzentrisch mit dem Körper;
wobei die Speichen in den Ring eingreifen und ab diesem radial nach innen strahlen, um in den Körper einzugreifen, um eine Vielzahl von hohlen Schlitzen (75) zu bilden, wobei die Peripherie jedes der Schlitze durch den Körper, einem Paar von angrenzenden Speichen und dem Ring definiert wird, sodass die Schlitze Bohrungen bilden, die den Durchgang von Objekten zulassen und
einen Bolzen (95) mit einem Schraubgewinde (99), welches sich fern in die Richtung der Mittelachse aus der mittigen Bohrung des Körpers erstreckt;
**dadurch gekennzeichnet, dass** die mittige Bohrung verjüngt ist, um einen Durchmesser zu haben, der kleiner am nahen Ende der Bohrung als am fernen Ende der Bohrung ist;
und ferner eine ringförmige Schulter (91) innerhalb der mittigen Bohrung umfassend, wobei sich die ringförmige Schulter am fernen Ende der Bohrung befindet, die eine Öffnung (93) mit einem Durchmesser bildet, der kleiner als das nahe Ende der mittigen Bohrung ist; und
der Bolzen einen Kopf (97) und das Schraubgewinde (95) aufweist, wobei der Kopf des Bolzens einen Durchmesser aufweist, der kleiner als der Durchmesser des nahen Abschnitts ist, aber einen Durchmesser größer als der Durchmesser der Öffnung der ringförmigen Schulter ist, wobei das Schraubgewinde des Bolzens einen Durchmesser aufweist, der kleiner als die Öffnung der ringförmigen Schulter ist, welches dem Bolzen ermöglicht, mit dem Kopf des Bolzens innerhalb des nahen Abschnitts des Bolzens positioniert zu werden und wobei sich das Gewinde des Bolzens durch und fern über die Öffnung der ringförmigen Schulter hinaus erstreckt.

2. Hybrider stapelbarer Befestiger nach Anspruch 1, wobei der Bolzen innerhalb der mittigen Bohrung (9) drehbar ist.

## Revendications

1. Élément de fixation empilable hybride, comprenant :
un corps cylindrique (3) possédant un orifice central définissant un axe central, ledit orifice possédant une extrémité distale (13) et une extrémité proximale (11), et formant une ouverture à son extrémité proximale (11),
une pluralité de rayons (71) déployés radialement depuis ledit corps ;
une couronne (73) concentrique avec ledit corps ;
lesdits rayons s'engageant et rayonnant radialement vers l'intérieur depuis ladite couronne de façon à s'engager avec ledit corps afin de former une pluralité de fentes creuses (75) avec le pourtour de chacune desdites fentes étant définies par ledit corps, une paire de rayons adjacents, et ladite couronne, de sorte que lesdites fentes forment des orifices permettant le passage d'objets, et
un boulon (95) possédant un filetage (99) s'étendant dans le sens distal de l'orifice central du corps en direction dudit axe central ;
**caractérisé en ce que** ledit orifice central est conique de façon à ce que son diamètre soit plus petit à l'extrémité proximale de l'orifice que vers l'extrémité distale de l'orifice ;
et comprenant en outre un épaulement annulaire (91) au sein dudit orifice central, ledit épaulement annulaire étant situé à ladite extrémité distale de l'orifice en formant une ouverture (93) dont le diamètre est plus petit que l'extrémité proximale dudit orifice central ; et
ledit boulon possédant une tête (97) et le filetage (95), le diamètre de ladite tête de boulon étant inférieur au diamètre de ladite section proximale de l'orifice, mais possédant un diamètre supérieur au diamètre de ladite ouverture de l'épaulement annulaire, le diamètre dudit filetage du boulon étant inférieur à ladite ouverture de l'épaulement annulaire, en permettant le positionnement dudit boulon avec ladite tête de boulon au sein de ladite section proximale de l'orifice, et le filetage dudit boulon s'étendant dans le sens distal à travers et dans le sens distal au-delà de ladite ouverture de l'épaulement annulaire.

2. Élément de fixation empilable hybride selon la revendication 1, ledit boulon pouvant être tourné au sein de l'orifice central (9).
